Europäisches Patentamt

European Patent Office

Office européen des brevets

(11) Publication number: 0 499 165 A2

# EUROPEAN PATENT APPLICATION

(21) Application number: 92102133.3

(22) Date of filing: 08.02.92

(51) Int. Cl.5: C13K 1/00

Priority 110291 IT PN91000009.

(30) Priority: 11.02.91

(43) Date of publication of application:
19.08.92 Bulletin 92/34

(84) Designated Contracting States:
AT BE CH DE DK FR IT LI NL

(71) Applicant: NORDECO S.p.A.
Zona Industriale Cirè
I-38057 Pergine Valsugana, Trento(IT)

(72) Inventor: Ramondetti, Giacomo
Via Trana 3b
I-Alpignano (TO)(IT)

(74) Representative: Gustorf, Gerhard, Dipl.-Ing.
Patentanwalt Dipl.-Ing. Gerhard Gustorf
Bachstrasse 6 A
W-8300 Landshut(DE)

(54) Sugary syrup, its production process and use.

(57) Syrup comprising a plurality of saccharides and compounded by a mixture of galactose, fructose and glucose respectively and substantially in the percentage of 40-45% of galactose, 25-27,5% of fructose and 26-28,5% of glucose, said syrup being the resulting product of a process which utilizes, at a level of raw material, lactose derived from ultrafiltration of whey, said whey being derived from cow or sheep milk, said ultrafiltration being able to produce serum-proteins and a permeate, said permeate being adapted to contain said lactose.

Fig. 1

| 1 | 2 | 3 | 4 | 5 | 6 | 7 | 8 | 9 |
|---|---|---|---|---|---|---|---|---|
| deproteinated whey container | purification (e.g. with carbon) | desalination | sterilisation and concentration with steam | hydrolysis with lactose | concentration up to 35-40° Baumé | Column isomerisation | Column concentration up to 65-70° Bé | End-product container |

The present invention relates to a sugary syrup, said syrup being adapted to comprise a plurality of saccharides.

It is well known that sugars belong to the family of glucides or carbohydrates, which are basis substances of human feed and are largely diffused mainly among vegetables (cereals, legumes, fruit, etc.). The most important and basic function of glucides is to supply the human organism the most energy, which can be utilized for the development of biochemical processes and for vital activities, like muscular, cerebral ones, etc.

Under a chemical point of view, glucides are "ternary" substances, i.e. they are adapted to comprise carbon, oxygen and hydrogen; some glucides combine with nitrogen (aminosugars), other glucides combine with sulphur (thiosugars). Glucides comprise a large number of compounds, which are usually classified as follows:

-monosaccharides, having formula $C_6H_{12}O_6$ (the most largely diffused) which comprise glucose, mannose, galactose and fructose;

-disaccharides, having formula $C_{12}H_{22}O_{11}$, which comprise saccharose, lactose, maltose;

-trisaccharides and polysaccharides.

Disaccharides have the empirical formula $(CH_2O)_n$, where $n$ is equal or greater than 3; disaccharides are formed by junction of two monosaccharide unities and the most common ones are able to hydrolyze into more simple glucides:

saccharose + $H_2O$ = glucose + fructose

maltose + $H_2O$ = glucose + glucose

lactose + $H_2O$ = glucose + galactose

From a point of view of feed, it is to be pointed out that glucose is present in the sweet fruit; fructose is present in the sweet fruit, too; lactose is present in milk, whereas saccharose (or cane sugar) is present in the beets and in the sugar cane.

Process of digestion, absorption and metabolism of glucides is quite important. After swallowing, polysaccharides undergo a demolition into monosaccharides. Digestion is catalyzed by enzymes, which are present in salivary, pancreatic and intestinal secretions. Monosaccharides, which are so obtained, are absorbed by intestinal villi and then they are conducted to liver through portal circulation. At liver level, but also at intestinal level, they are converted into glucose by action of isomerases. Glucose represents the form immediately utilizable by organism. If organism needs a promptly utilizable energy, glucose is degraded till $CO_2$ and $H_2O$. From this complete degradation, organism obtains the bigger and more promptly utilizable energy, which is necessary for development of all other metabolic processes. As far as human feed is concerned, glucides are necessary not only for supplying energy to muscular work, to cerebral metabolism, to red corpuscles metabolism and to all organic functions, but also because the are able to influence the absorption and metabolism of lipides, protides and vitamines. Glucides of feeding interest are mainly contained in vegetable food and comprise: glucose and fructose among monosaccharides; saccarose among disaccharides starch, which is present among in all cereals among polysaccharides. Lactose should be indeed, recalled among disaccharides, which is derived from milk and which presents, with respect to other glucides, an incomplete digestibility.

At this point, it should be noted that glucides are absorbed by organism just at the level of monosaccharides. In fact, they can utilized by organism just in this form. In addition, their absorption velocity greatly differs each one from the other monosaccharides, as glucose is, for instance, more rapidly absorbed than fructose.

As for the interest of market towards sweetening substances, consumers honestly don't distinguish substantially characteristics of a monosaccharide and the characteristics of a disaccharide. That is, generally speaking, it is not appreciated the fact that a spoon of sugar in a cup of coffee in the morning is absorbed by organism immediately (like a monosaccharide), or if it requires a bit of time before being absorbed. From a point of view of a physician, it could be interesting to know better, for instance in the case of diabetics, how organism is reacting immediately after swalling a monosaccharide, with respect of a later reaction due to a disaccharide. At contrary, in the case of sportsmen, the interest prevails for a monosaccharide with respect to a disaccharide, because they are interested in the immediate effect,consequent to swallowing of a monosaccharide with respect to a delayed effect due to a disaccharide, especially when a tiredness should be promptly recovered after an effort extended for a long time. Also if the a.m. statement couldn't be evaluated like a generally valid rule, it can be pointed out that a monosaccharide glucide (for instance a fructose) can be considered a more noble and required sweetening substance than a disaccharide glucide, especially in our times, when quality of life, a greater availability of leisure, etc. make people appreciate advantages, not long ago difficult to conceive. It is also apparent that a sweetening substance, which is derived from a monosaccharide is justified to be more expensive than a sweetening substance based on saccharose, just because the taller one is produced from beets and sugar cane, which represent the most diffused and the cheapest raw material for producing sweetening substances. The following question is, therefore, widely justified: "Are raw materials present and available on the market, from which it is possible to get sweetening substances, which are mainly based on monosaccharides? Will it ever possible to expect a use in big amount of monosaccharides, not only at a level of final consumers, but also at a level of industries, for instance confectionar industries?"

A problem, which syrup according to the present invention intende to solve, is to propose a raw material for the production of sweetening substances, said raw material being based on monosaccharides and being available on the market at a low price. Said problem is solved by the syrup according to the invention, which is characterized by the fact that it is compound by a mixture of galactose, fructose and glucose respectively and substantially in the percentage of 40-44% of galactose, 25-27,5% of fructose and 26-28,5% of glucose, said syrup being the resulting product of a process, which utilizes, at a level of raw material, lactose derived from ultrafiltration of whey, said whey being derived from cow or sheep milk, said ultrafiltration being able to produce serum-proteins and a permeate, said permeate being adapted to contain said lactose.

As a matter of fact, the advantages offered by a syrup according to the invention are not limited to the fact of a sweetening substances, which are based on monosaccharide glucides, because they are completed with a series of further advantages. It's well known that whey derived from cow or sheep milk is a typical waste product of dairy industry. Thanks to modern ultrafiltration process, it is possible to obtain a noble product, which is interesting for the market,like serum-proteins.

A waste product, which is derived from this process, is made of a permeate, which is containing a high level of lactose. Utilisation of said lactose could involve other processes for production of: lactic acid, itaconic acid, yeasts, citric acid, etc. They are all inflationed products, i.e. products which could be obtained at lower costs, starting from other raw materials and relevant different processes. And a question is fully justified: "What to do with said lactose?" It's also true that lactose can be utilized like excipient and like food for children,thanks to its high feed power. It could be utilized also like integrating food for animals and like substrate for many medicinals. As for first hypotesis, (especially at pure state), lactose is not easily digestible for some populations, like mediterranean ones, because they are lacking $\beta$-galactosidase, which enables its assimilation. In any case, all potential utilisations of lactose make it a substance, a raw material not always economically exploitable. On the average, about 10% of lactose is utilized by pharmaceutical industry, 40% lactose is utilized like food for animals and the remainder is poured in environment, causing serious polluting problems.

A further important feature of syrup according to the invention is its manufacturing process, from which a syrup made of mixture of galactose, fructose and glucose is obtained, utilizing a a sequence of processes, which are well known the in the field of chemical industry, but they are not yet been utilized for lactose processing. A sequence of chemical processes, formed by a plurality of unitary reactions, known and applied in fields different from lactose field, allow to get, as a final result, a syrup with sweetening, organolectic and assimilation properties for human organism, at production costs, which are substantially lower with regard to tradizional processes which obtain the same result.

Said production process of syrup according to the invention is characterized by the fact that it comprises, not necessarily in the same sequence, the following phases:

A) purification and desalinesation of lactose;

b) concentration of the result;

c) scission of lactose molecules by hydrolisi;

d) isomerisation of glucose into fructose;

e) purification and concentration of product.

A last consideration concerns the use of syrup according to the invention, which is characterized by the fact that said syrup, as it is compounded by monosaccharide glucides, causes a digestion already at a level of salivary, pancreatic and also intestinal secretions, said digestion at hepatic level being adapted to convert said monosaccharides into glucose, said glucose being able to represent the promptly utilisable form by the organism, whereby said syrup is adapted to be utilized like food for sportsmen and for people, which need an energetic and substantially immediate contribution.

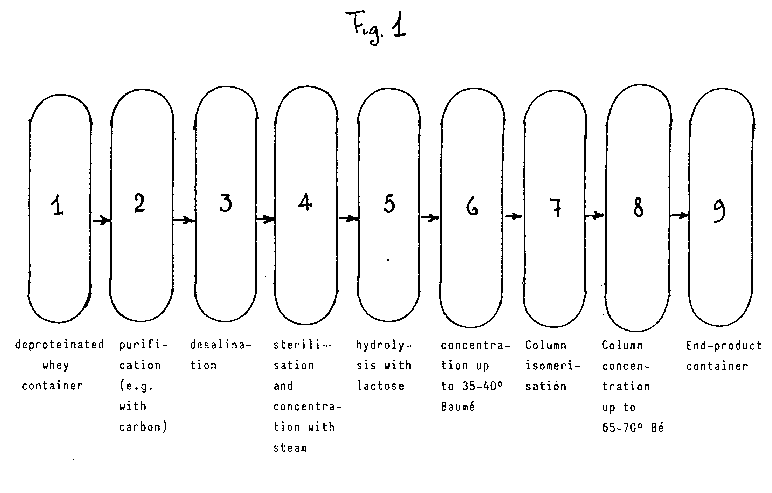

Said and further characteristics will be apparent from following description. and from the alleged drawings, where fig. 1 represents a scheme of various phases of a process for obtaining a syrup according to the invention.

Modern society offered everybody (especially in developped Countries) use of sweetening substances, said use having being satisfied up to just some centuries ago, by fruit and honey. At present time, production of sugar - at level of saccharose, which is a disaccharide - satisfies in a full way the request of market, as it is realized thanks to beets and sugar canes. Another source of sugar is realized at level of H.F.C.S (high-fructose-corn-syrup), i.e. a sugar which is manufactured especially in the U.S.A., thanks to their high amount of availability of corn. The primary raw material is given by starch, which is present in the corn; glucose is obtained by means of chemical hydrolisis. Then, processing of purification, desanalisation and isomerisation follows. It's a chemical processing, which can be realized just. in the U.S.A., because price of corn doesn't allow this processing elsewhere.

As for prior art, a processing is known with reference of partial scission of lactose present in milk, whenever said milk is to be got more digestible. Practically, a partial hydrolisis of lactose is made, at a percentage of about 20-30% of lactose. A waste product od dairy industry is given by whey, which can be ultrafiltred in order to obtain a permeate based on lactose. Starting from lactose, it is possible to obtain a syrup, which basically contains three monosaccharides: galactose, fructose and glucose, in a percentage of about, respectively, 40-44%, 25-27,5% and 26-28,5%, together with other oligosaccharide sugars and a negligible amount (about 1%) of lactose. If it is required, it is possible to modify the percentage composition of mixture in favour of fructose at loss of glucose. At present time, the perfect percentage could seem the a.m. percentage, also taking into account the interest of market.

The processing is described and illustrated in fig. 1, where, starting from deproteinated whey in a container, through purification, desanalisation, sterilisation and concentration with steam, hydrolysis with lactose, concentration up to 35-40° Bé, isomerisation, concentration up to 65-70° Bé, it is possible to arrive to a syrup according to the invention in a container.

The processing, which the present invention suggests, aims not only to supply market with sweetening substances, which are interesting thanks to their easy and immediate assimilation from human organism, but also because it is possible, in such a way, to avoid pollution of environment, due to not controlled discharge of whey or of permeate, which is rich of lactose, said lactose being obtained bu ultrafiltration, whenever its use is not economical.

It is apparent that a different percentage composition of syrup according to the invention, could be obtained, whenever a request in this sense is formulated by industries, which manufacture sweetening substances for sportsmen, for children or for people having special food requirements (diabetics, etc.)

**Claims**

1. A syrup, said syrup being adapted to comprise a plurality of saccharides, characterized by the fact, that it is compounded by a mixture of galactose, fructose and glucose respectively and substantially in the percentage of 40-45% of galactose, 25-27,5% of fructose and 26-28,5% of glucose, said syrup being the resulting products of a process which utilizes, at a level of raw material, lactose derived from ultrafiltration of whey, said whey being derived from cow or sheep milk, said ultrafiltration being able to produce serum-proteins and a permeate, said permeate being adapted to contain said lactose.

2. Syrup according to Claim 1, characterized in that said percentage composition may be modified as to increase the percentage of fructose at a loss of percentage of glucose.

3. Production process for the production af a sugary syrup comprising galactose, fructose and glucose according to the percentages specified in Claim 1, characterized by the fact that it provides for a processing of permeate, said permeate being obtained from the ultrafiltration of whey, said whey being derived from cow or sheep milk according to the the following, not necessarily in the same sequence:

   a) stocking into container of deproteinated whey;
   b) purification;
   c) desalinisation and concentration with steam;
   d) scission of lactose molecules by hydrolysis, utilizing an enzyme, for instance lactasis, in order to obtain from lactose disaccharide: galactose and glucose monosaccharides;
   e) concentration up to 35-40° Bé;
   f) column isomerisation of glucose within a percentage of at least 45% of total glucose, in order to obtain fructose and to facilitate absorption from living organism;
   g) column concentration up to 65-70° Bé;
   h) stocking of the end-product into a container.

4. Production process according to Claim 3, characterized by the fact that a percentage greater than 45% of total glucose can be isomerized as to obtain a fructose percentage substantially greater than 25-27,5%.

5. Use of sugary syrup according to Claim 1, manufactured according process of Claim 3, characterized by the fact that said syrup, as it is compounded substantially by monosaccharide glucides, causes a digestion even at a level of salivary, pancreatic and intestinal secretions, said digestion at hepatic level being adapted to convert said monosaccharides into glucose, said glucose representing the form promptly utilizable by living organism, whereby said syrup is adapted to be utilized like food for sportsmen and for people which need energetic, substantially immediate, contribution.

6. Sugary syrup according to Claim 1,2, production process according to Claim 3,4 and use of sugary syrup according to Claim 5, as resulting from the description.

EP 0 499 165 A2

## Fig. 1

| 1 | 2 | 3 | 4 | 5 | 6 | 7 | 8 | 9 |
|---|---|---|---|---|---|---|---|---|
| deproteinated whey container | purification (e.g. with carbon) | desalination | sterilisation and concentration with steam | hydrolysis with lactose | concentration up to 35-40° Baumé | Column isomerisation | Column concentration up to 65-70° Bé | End-product container |